Europäisches Patentamt

European Patent Office

Office européen des brevets

(11) Veröffentlichungsnummer: **0 033 310 B1**

(12) **EUROPÄISCHE PATENTSCHRIFT**

(45) Veröffentlichungstag der Patentschrift:
18.05.83

(21) Anmeldenummer: **81890005.2**

(22) Anmeldetag: **15.01.81**

(51) Int. Cl.³: **B 22 D 11/16**, G 01 B 7/28,
G 01 B 7/31

(54) Messeinrichtung an einer von drehgelagerten Rollen gebildeten Rollenbahn sowie Verfahren zur Auswertung der Messwerte.

(30) Priorität: **25.01.80 AT 414/80**

(43) Veröffentlichungstag der Anmeldung:
**05.08.81 Patentblatt 81/31**

(45) Bekanntmachung des Hinweises auf die Patenterteilung:
**18.05.83 Patentblatt 83/20**

(84) Benannte Vertragsstaaten:
**BE CH DE FR GB IT LI LU NL SE**

(56) Entgegenhaltungen:
**FR-A-2 127 554**
**FR-A-2 243 411**
**FR-A-2 283 747**
**FR-A-2 363 080**

(73) Patentinhaber: **VOEST-ALPINE Aktiengesellschaft, Werksgelände, A-4010 Linz (AT)**

(72) Erfinder: **Hecht, Hans, Dipl.-Ing., Eisenwerkstrasse 14, A-4020 Linz (AT)**

(74) Vertreter: **Wolfram, Gustav, Dipl.-Ing., Schwindgasse 7 P.O. Box 205, A-1041 Wien (AT)**

ACTORUM AG

## Messeinrichtung an einer von drehgelagerten Rollen gebildeten Rollenbahn sowie Verfahren zur Auswertung der Messwerte

Die Erfindung betrifft eine Messeinrichtung an einer von drehgelagerten Rollen gebildeten Rollenbahn, insbesondere an einer gegenüberliegenden Strangführungsrollen aufweisenden Stranggiessanlage, mit einem entlang der Rollenbahn bewegbaren und dabei die Rollen in Drehung versetzenden Tragkörper, an dem mit den Mantelflächen der Rollen zusammenwirkende Messfühler angeordnet sind, die den Abstand der Mantelflächen der Rollen zu einer im Tragkörper vorgesehenen neutralen Faser messen.

Es sind Messeinrichtungen für Rollenbahnen von Stranggiessanlagen bekannt (DE-A-2 427 895), die einen Tragkörper aufweisen, in dem Messfühler angeordnet sind, deren Taststifte bei Vorbeibewegen der Messeinrichtung bei den Strangführungsrollen mit den Mantelflächen der Strangführungsrollen in Kontakt gebracht werden. Auf diese Weise kann der Abstand zweier einander gegenüberliegender Rollen gemessen werden, wobei der gemessene Abstand dem Abstand zweier Oberflächenpunkte der beiden Rollen entspricht, mit welchen Oberflächenpunkten die Messfühler jeweils in Kontakt gelangen.

Aufgrund der hohen Belastungen der Strangführungsrollen durch den Gussstrang kann es vorkommen, dass sich Rollen verbiegen. Mit der Messeinrichtung gemäss der DE-A-2 427 895 ist es nicht möglich, zu unterscheiden, ob eine Rolle verbogen ist oder ob die Lage der Rollenlager fehlerhaft ist.

Mit einer Einrichtung der eingangs beschriebenen Art, die aus der DE-A-24 42 424 bekannt ist, lassen sich die Abstände der Mantelflächen der Rollen zu einer im Tragkörper vorgesehenen, die neutrale Phase des Tragkörpers bildenden Einlage messen. Mit dieser bekannten Einrichtung ist es nicht möglich, den Rundlauf von Rollen zu überprüfen, um verbogene oder fehlerhaft gelagerte Rollen feststellen zu können.

Es ist weiters eine Messeinrichtung bekannt (DE-C-26 39 240), mit der es möglich ist, den Rundlauf einer Rolle zu überprüfen. Bei dieser Messeinrichtung ist eine antreibbare Rolle vorgesehen, die, nachdem sie mit einer zu vermessenden Rolle in Kontakt gelangt ist, diese antreibt, wobei ein neben dieser antreibbaren Rolle liegender Messfühler Rundlaufungenauigkeiten misst. Der Einbau einer angetriebenen Rolle in eine solche Messeinrichtung ist sehr aufwendig. Ein weiterer Nachteil dieser Messeinrichtung ist darin zu sehen, dass sie nicht kontinuierlich durch die Strangführung bewegt werden kann, sondern schrittweise von Rolle zu Rolle bewegt werden muss.

Aus der DE-A-26 39 241 ist eine Mess- und Prüfvorrichtung bekannt, mit der der Schlag von Rollen geprüft werden kann. Zu diesem Zweck weist diese Vorrichtung in einem Halterahmen paarweise gelagerte Zentrierrollen und mittig zwischen den Zentrierrollen und senkrecht zu deren Achsen angeordnete Messfühler auf. Jedes dieser Zentrierrollenpaare hat die Aufgabe, während der Drehung einer Rolle den zwischen den Zentrierrollen angeordneten Messfühler genau in Richtung zur Achse der rotierenden Rolle zu halten. Die bekannte Vorrichtung enthält zusätzlich zwei weitere Messfühlerpaare, die in Richtung parallel zur Bewegungsrichtung des Tragkörpers im Abstand voneinander angeordnet sind. Sie dienen dazu – u.zw. nach fluchtendem Einstellen zu den Rollenpaaren, die dem an den Zentrierrollen anliegenden Rollenpaar benachbart sind –, den Radius der Rollenbahnen, insbesondere an den Übergängen von Segmenten der Rollenbahnen, zu vermessen. Auch bei dieser Vorrichtung ist der Einbau einer antreibbaren Rolle sehr aufwendig. Weiters kann auch diese Vorrichtung nur schrittweise und nicht kontinuierlich durch die Strangführung bewegt werden.

Die vorliegende Erfindung stellt sich die Aufgabe, die geschilderten Nachteile und Schwierigkeiten zu vermeiden und eine Messeinrichtung zu schaffen, mit der es möglich ist, den Rundlauf der Rollen einer Rollenbahn zu prüfen, d.h. verbogene oder exzentrisch gelagerte Rollen festzustellen, während die Vorrichtung kontinuierlich entlang der Rollenbahn bewegt wird, und welche Einrichtung sehr einfach und betriebssicher aufgebaut ist.

Diese Aufgabe wird erfindungsgemäss dadurch gelöst, dass der Tragkörper an der der Rollenbahn zugekehrten Seite mindestens drei in Richtung parallel zur Bewegungsrichtung des Tragkörpers im Abstand voneinander angeordnete Messfühler, die die Mantelfläche einer Rolle in aufeinanderfolgenden Winkelstellungen der Rolle vermessen, aufweist.

Die Messeinrichtung kann mit Hilfe von Seilen oder Ketten entlang der Rollenbahn bewegt werden. Bei Verwendung der Messeinrichtung in einer Stranggiessanlage kann sie an einen Anfahrstrang angekoppelt werden und mit Hilfe von in der Strangführung vorgesehenen Treibrollen durch die Strangführung bewegt werden.

Wird die Messeinrichtung an einer Rolle mit «Schlag» vorbeibewegt, so stellt die Aufeinanderfolge der Berührungspunkte eines Rollenmantels mit dem Tragkörper vom Tragkörper aus, u. zw. von dessen neutraler Faser aus betrachtet eine Linie ähnlich einer Sinuslinie dar. Wird der Tragkörper hingegen an einer einwandfrei rundlaufenden Rolle vorbeibewegt, so stellt die Aufeinanderfolge der Berührungspunkte des Rollenmantels mit dem Tragkörper dieser Rolle (ebenfalls von der neutralen Faser des Tragkörpers aus beobachtet) eine Gerade dar. Mit Hilfe der drei Messfühler ist es möglich, die Sinuslinie eindeutig von der Geraden zu unterscheiden: Sind die von den Messfühlern abgenommenen Messwerte alle gleich gross, so handelt es sich um eine rundlaufende Rolle, sind die Messwerte verschieden gross, so handelt es sich um eine Rolle mit «Schlag».

Damit der Messaufwand nicht unnötigerweise hoch wird, sind am Tragkörper vorzugsweise nur drei Messfühler angeordnet.

Um mit einem schmalen Tragkörper auszukommen, ist es vorteilhaft, die Messfühler hintereinander entlang einer Linie parallel zur Bewegungsrichtung des Tragkörpers anzuordnen. Dies hat ausserdem den Vorteil, dass die Exzentrizität für eine ganz bestimmte Querschnittsstelle einer Rolle geprüft werden kann.

Für die Auswertung der Messwerte ist es vorteilhaft, wenn der Abstand vom ersten zum dritten Messfühler kleiner ist als der Rollenabstand zweier benachbarter Rollen einer Rollenbahn, da dann jeweils drei zeitlich aufeinanderfolgende Messwerte zu ein und derselben Rolle gehören. Der Abstand zwischen jeweils zwei hintereinander angeordneten Messfühlern soll dabei zweckmässig möglichst ungleich dem halben Rollenumfang einer Rolle sein, da es sonst in einem besonders ungünstigen Fall möglich ist, dass alle drei Messfühler in einen Knotenpunkt der sinusähnlichen Linie fallen, die die Aufeinanderfolge der Berührungspunkte zwischen Mantel der verbogenen Rolle und Tragkörper darstellt. Es ist besonders vorteilhaft, wenn der Abstand vom ersten zum letzten Messfühler höchstens 90% des Abstandes zweier benachbarter Rollen sowie höchstens 90% des Umfanges einer Rolle beträgt.

Nach einer bevorzugten Ausführungsform weist der Tragkörper als neutraler Faser ein Stahlband auf, an dem beiderseits jeweils drei Messfühler angeordnet sind, wobei die Messfühler jeweils einer Seite mit ihren vom Stahlband weggerichteten Enden mit einem weiteren Stahlband verbunden sind und wobei weiters jeweils zwischen dem äusseren Stahlband und dem die neutrale Faser verkörpernden Stahlband die Stahlbänder auseinanderdrückende Druckelemente vorgesehen sind.

Zweckmässig sind dabei von den Messfühlern jeder Seite ein Messfühler mit dem die neutrale Faser verkörpernden Stahlband starr und die übrigen Messfühler mit diesem Stahlband gelenkig verbunden, wogegen alle Messfühler mit den äusseren Stahlbändern gelenkig verbunden sind.

Die Erfindung beinhaltet ferner ein Verfahren, mit dem es möglich ist, gleichzeitig die Grösse der Exzentrizität einer Rolle und die Versetzung der Lage der Rotationsachse einer Rolle gegenüber der theoretischen Ideallage zu ermitteln, welches Verfahren dadurch gekennzeichnet ist, dass die von drei Messfühlern ermittelten Messwerte in einem Analog/Digital-Umwandler in Digitalwerte umgewandelt werden, die Extremwerte gesucht werden und einem Rechner eingegeben werden, der unter Lösung eines Systems von drei Gleichungen mit drei Variablen die Grösse des Rundlauffehlers und die Abweichung der Lage der Drehachse der Rolle von der theoretisch richtigen Lage errechnet.

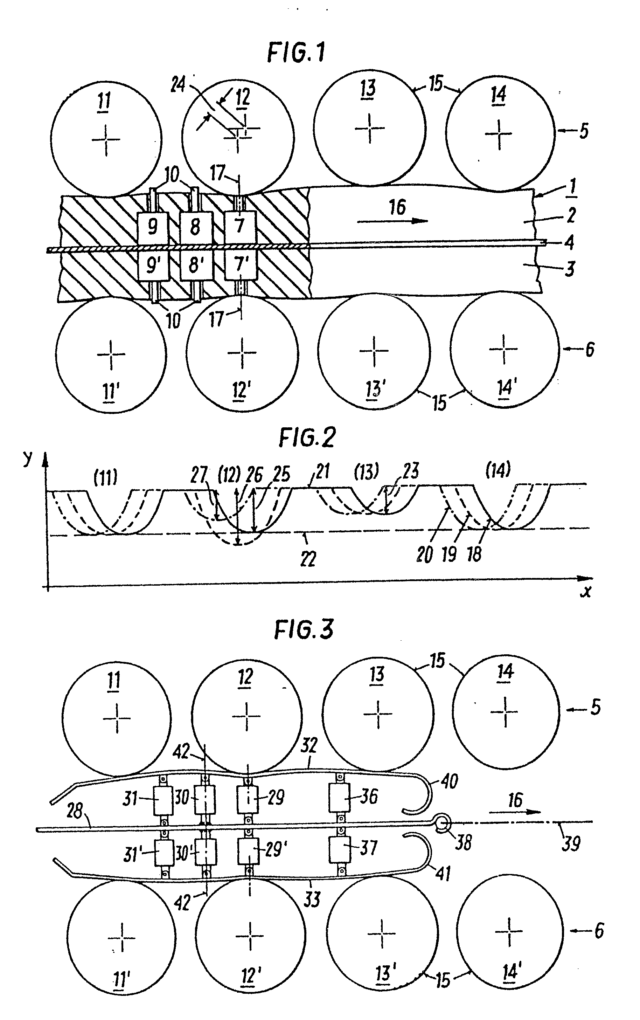

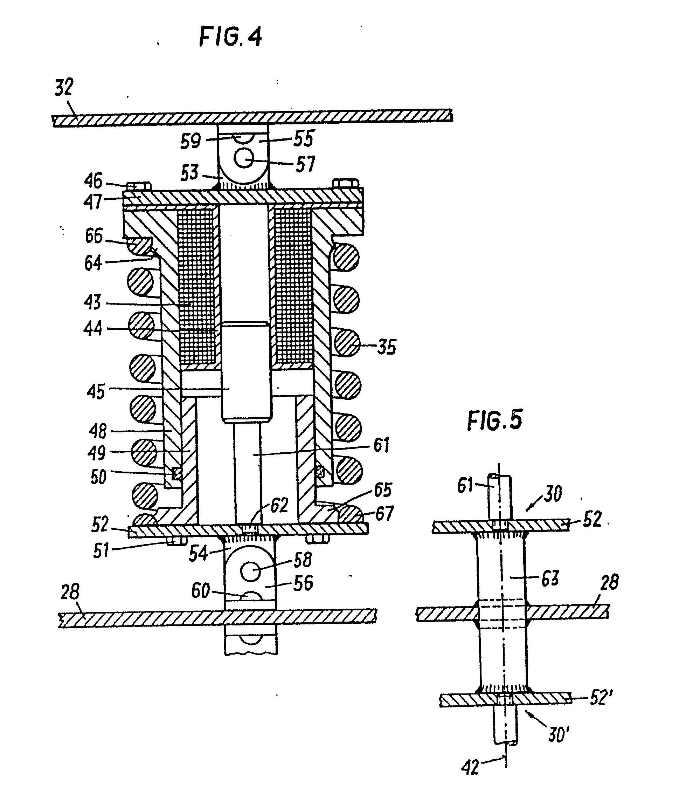

Die Erfindung ist nachfolgend anhand der Zeichnung an zwei schematisch dargestellten Ausführungsbeispielen näher erläutert, wobei Fig. 1 eine Messeinrichtung im Schnitt zwischen zwei Rollenbahnen einer Stranggiessanlage zeigt. Fig. 2 veranschaulicht einen Messschrieb dieser Messeinrichtung. In Fig. 3 ist in zu Fig. 1 analoger Darstellung eine Messeinrichtung gemäss einer zweiten Ausführungsform dargestellt. Fig. 4 zeigt einen Messfühler im Schnitt, Fig. 5 eine Befestigung eines Messfühlers ebenfalls in Schnittdarstellung.

Der Tragkörper 1 der Messeinrichtung weist gemäss der in Fig. 1 dargestellten Ausführungsform elastisch verformbare Kunststoffstränge 2, 3 auf, zwischen denen ein elastisch verformbares, die neutrale Faser des Tragkörpers 1 verkörperndes Stahlband 4 eingelegt ist. Dieser Tragkörper 1, von dem in Fig. 1 nur ein Abschnitt gezeichnet ist, ist an einen nicht dargestellten Anfahrstrang angekuppelt, der mit Hilfe von Treibgerüsten durch die von einander gegenüberliegenden Rollenbahnen 5, 6 gebildete Strangführung hindurchbewegt wird. Auf diesem Stahlband sind sechs vorzugsweise als induktive Wegmessgeber 7, 7', 8, 8', 9, 9' ausgebildete Messfühler befestigt. Die Montage der Wegmessgeber erfolgt so, dass sich ihre Taststifte 10, die mit den Rollen 11 bis 14 bzw. 11' bis 14', d.h. mit den Mantelflächen 15 dieser Rollen in Kontakt gelangen, rechtwinkelig zur Ebene des Stahlbandes 4 bewegen. Die Wegmessgeber 7, 8 und 9 sind auf der Oberseite des Stahlbandes 4 befestigt und ihre Taststifte 10 werden nacheinander mit den oberen Strangführungsrollen 11 bis 14 der Rollenbahn 5 in Berührung gebracht, wenn die Messeinrichtung in Richtung des Pfeiles 16 entlang der Rollenbahnen 5, 6 bewegt wird. In analoger Weise sind auf der Unterseite des Stahlbandes 4 die Wegmessgeber 7', 8' und 9' befestigt, deren Taststifte 10 nacheinander mit den Rollen 11' bis 14' der unteren Rollenbahnen 6 in Berührung gebracht werden.

Die Achsen 17 der sechs Wegmessgeber liegen alle in einer Ebene, die normal auf das Stahlband 4 und parallel zur Bewegungsrichtung 16 steht. Die Abstände je zweier Wegmessgeber 7, 8 und 8, 9 bzw. 7', 8' und 8', 9' sind alle gleich gross. Der Abstand des letzten Wegmessgebers 9 (bzw. 9') vom ersten Wegmessgeber 7 (bzw. 7') ist sowohl kleiner als der Abstand zweier nebeneinanderliegender Strangführungsrollen einer Rollenbahn 5 bzw. 6 als auch kleiner als der Umfang einer Strangführungsrolle.

Die nicht dargestellten elektrischen Anschlüsse der drei induktiven Wegmessgeber einer Seite werden jeweils an den Eingang eines Dreifachschreibers angeschlossen. Fig. 2 stellt einen Messschrieb eines solchen Dreifachschreibers dar.

Während sich die Messeinrichtung an einer Strangführungsrolle vorbeibewegt, werden nacheinander die Taststifte 10 der induktiven Wegmessgeber betätigt. Da der Tragkörper (im Ruhezustand) eine grössere Dicke aufweist als die grösste Distanz der einander gegenüberliegenden Rollenbahnen 5, 6 werden die Rollen infolge der zwischen den Oberflächen des Tragkörpers 1 und den Mantelflächen der Rollen herrschenden Reibung bei Bewegen des Tragkörpers
1 in Drehung versetzt, so dass sich die Rollen bei
jedem Kontakt mit einem der Taststifte in einer
anderen Winkelstellung befinden.

In Fig. 2 zeigt die Kurve 18 mit voll ausgezeichneter Linie die Kurve, die der dem Wegmessgeber 7 zugeordnete Schreiber aufgezeichnet hat.
Die Kurven 19 (strichliert) und die Kurven 20
(strichpunktiert) wurden von jenen Schreibern
aufgezeichnet, die den Wegmessgebern 8 bzw. 9
zugeordnet sind.

Befinden sich die Taststifte 10 zwischen den
Rollen, so zeichnen die Schreiber gerade Linien
21 parallel zur Abszisse x des Schriebes. Wird ein
Taststift 10 infolge des Kontaktes mit einer Rolle
betätigt, so zeichnet der Schreiber eine Kurve,
die den Ausschnitt einer Ellipse darstellt. Werden
die Taststifte von einer einwandfreien, rundlaufenden Rolle 11, 13, 14 betätigt, so sind die Scheitelhöhen aller drei Ellipsen, die von den den Wegmessgebern zugeordneten Schreibern aufgezeichnet werden, gleich gross. Hat die Drehachse
einer Rolle die richtige Lage, so berühren die
Scheitel aller drei aufgezeichneten Ellipsenabschnitte eine zur Abszisse x parallele Sollwertgerade 22. In den Figuren ist dies für die Rollen 11
und 14 der Fall. Der Abstand der Rolle 13 von der
Rolle 13' ist in der Fig. 1 grösser als der Idealabstand. Die Scheitelhöhen 23 der von den Schreibern gezeichneten Ellipsen sind geringer als der
Sollwert (bei 22).

Bei der Rolle 12 fällt der Mittelpunkt der kreisförmigen Querschnittsfläche nicht mit der Rotationsachse der Rolle 12 zusammen, sondern hat
von dieser einen Abstand 24. Während die Vorrichtung an der Rolle 12 vorbeibewegt wird, wird
die Rolle 12 durch Reibschluss an der Oberfläche
des strangförmigen Tragkörpers 1 gedreht und
die Taststifte 10 der induktiven Wegmessgeber 7,
8 und 9 werden nacheinander um verschiedene
Beträge eingedrückt. Demnach sind die Scheitelhöhen 25, 26, 27 aller drei vom Dreifachschreiber
aufgezeichneten Ellipsen-Abschnitte verschieden gross. Aus dem Messschrieb ist also ersichtlich, dass die Rolle 12 einen «Schlag» aufweist.

Gemäss dem in den Fig. 3 bis 5 dargestellten
Ausführungsbeispiel weist die Messeinrichtung
ebenfalls ein mittleres, elastisch verformbares,
die neutrale Faser verkörperndes Stahlband 28
auf. An diesem Stahlband 28 sind drei Messfühler
29, 30, 31 auf der einen Seite und weitere drei
Messfühler 20', 30', 31' auf der anderen Seite angeordnet. Die Messfühler 29, 30, 31 tragen an
dem dem Stahlband 28 abgewendeten Ende ein
weiteres Stahlband 32. In analoger Weise tragen
die Messfühler 29', 30', 31' ein Stahlband 33.

Die Stahlbänder 32 und 33 sind ebenfalls elastisch verformbar. Sämtliche Messfühler 29 bis
31 und 29' bis 31' enthalten, wie aus Fig. 4 ersichtlich ist, Druckfedern 35, mit deren Hilfe die Stahlbänder 32 und 33 gegen die Strangführungsrollen
11 bis 13 bzw. 11' bis 13' gedrückt werden. Mit 36
und 37 sind weitere Druckelemente bezeichnet, mit denen die Vorderteile der Stahlbänder 32 und
33 gegen die Strangführungsrollen gedrückt werden.

Das mittlere Stahlband 28 trägt am vorderen
Ende einen Bolzen 38. An diesem Bolzen 38 kann
eine Kette befestigt werden, deren Mittellinie in
Fig. 3 mit 39 bezeichnet ist. Mit Hilfe dieser Kette
(oder eines Anfahrstranges) kann die Messeinrichtung durch die Strangführung der Stranggiessanlage bewegt werden.

Die Stahlbänder 32 und 33 sind jeweils am vorderen Ende 40 bzw. 41 kreisbogenförmig nach innen gekrümmt. Diese Krümmungen dienen als
Anschlag für das mittlere Stahlband 28, damit
sich dieses nicht zu weit aus seiner Mittellage bewegen kann, wenn die Messeinrichtung durch
eine gekrümmte Rollenbahn bewegt wird.

Die mittleren Messfühler 30, 30' sind starr am
Stahlband 28 befestigt, u.zw. derartig, dass die
Mittellinien 42 dieser Messfühler normal auf die
Mittelebene des Stahlbandes 28 stehen. Die Verbindungen der Messfühler 29, 29' und 31, 31' sowie der Druckelemente 36, 37 mit den Stahlbändern 28, 32 und 33 sind gelenkig ausgebildet.
Wird das Messgerät durch eine gekrümmte
Strangführung bewegt, so stehen die mittleren
Messfühler 30, 30' stets genau in radialer Richtung zur Strangführung. Die übrigen Messfühler
hingegen weichen von dieser Richtung ab; die
Abweichung ist jedoch so gering, dass dadurch
bedingte Messfehler vernachlässigt werden können.

Fig. 4 zeigt den Aufbau der Messfühler. Jeder
Messfühler trägt im Innern eine Spule 43, welche
auf einen Spulenkörper 44 gewickelt ist.

Ein Kern 45 ist im Spulenkörper 44 axial bewegbar angeordnet. Wird der Kern 45 weiter in den
Spulenkörper 44 eingetaucht, so steigt die Induktivität der Spule. Die Induktivität der Spule kann
an den nicht dargestellten Zuleitungen zur Spule
43 gemessen werden und stellt ein Mass für den
Abstand der Stahlbänder 32 bzw. 33 vom mittleren Stahlband 28 dar.

Der Spulenkörper 44 ist mit Hilfe von Schrauben 46 mit einer Platte 47 und einer die Spule aussen umgebenden Hülse 48 verschraubt. In die
Hülse 48 ist eine weitere Hülse 49 geschoben und
gegenüber dieser mittels einer Dichtung 50 gegen das Eindringen von Schmutz abgedichtet.
Die Hülse 49 ist an einem Ende mittels Schrauben
51 an einer weiteren Platte 52 angeschraubt. Die
beiden Platten 47 und 52 werden durch das als
Schraubenfeder ausgebildete Druckelement 35,
welches ausserhalb der Hülse 48 angeordnet ist,
auseinandergedrückt.

An der Aussenseite jeder Platte 47 und 52 ist jeweils eine Lasche 53 bzw. 54 angeschweisst. Diese Laschen 53 und 54 stehen jeweils mit einer
weiteren Lasche 55 bzw. 56 mittels Bolzen 57 und
58 in gelenkiger Verbindung. Die Laschen 55 und
56 sind mittels Nieten 59 bzw. 60 mit den Stahlbändern 32 bzw. 28 verbunden.

Der Kern 45 wird von einem Schaft 61 getragen, welcher mit Hilfe eines Gewindeansatzes 62
in die Platte 52 geschraubt ist.

Fig. 5 zeigt die Befestigung der mittleren Messfühler 30 und 30' am mittleren Stahlband 28. Die Befestigung erfolgt mit Hilfe eines Bolzens 63, der das Stahlband 28 durchsetzt und an dessen beiden Enden die Messfühler 30 bzw. 30' angeschweisst sind. Der Bolzen 63 ist am Stahlband 28 angeschweisst.

Die Hülsen 48 und 49 tragen jeweils einen Bund 64 bzw. 65, der die Endwindungen 66 und 67 der Schraubenfeder 35 übergreift. Dadurch wird verhindert, dass die Messeinrichtung auseinanderfällt, wenn sie sich ausserhalb der Strangführung befindet.

Das Verfahren zur Auswertung der Messwerte der oben beschriebenen Messeinrichtung geht von der Tatsache aus, dass eine Sinuskurve bekannter Wellenlänge durch drei Bestimmungsstücke eindeutig festgelegt ist. Die angenäherte Sinuskurve, die die Aufeinanderfolge der Berührungspunkte des Mantels einer Rolle mit dem Tragkörper vom Tragkörper aus beobachtet darstellt, lässt sich durch folgendes System von drei Gleichungen mit drei Variablen beschreiben:

$$M1 = x \cdot \sin y + z$$

$$M2 = x \cdot \sin \left( \frac{2 \cdot K2}{D} + y \right) + z$$

$$M3 = x \cdot \sin \left( \frac{2 \cdot K3}{D} + y \right) + z$$

Hierin bedeuten:

M1, M2, M3 ... Messwerte von drei Messfühlern 1, 2 und 3.
K2, K3 ... Abstand der Messfühler 2, 3 vom Messfühler 1.
D ... Rollendurchmesser
X ... Amplitude der Sinuskurve
Y ... Phase der Sinuskurve
z ... Verschiebung der Mittellinie der Sinuskurve gegenüber der Abszisse.

Durch Umformen kommt man zu folgender Lösung:

$$y = \arctan \frac{M2 \sin \frac{2K3}{D} - M3 \sin \frac{2K2}{D}}{\cos \frac{2K2}{D} - \cos \frac{2K3}{D}}$$

$$x = \frac{M1 - M2}{\sin y - \sin \left( \frac{2K2}{D} + y \right)}$$

$$z = M1 - x \cdot \sin y$$

Das Verfahren zur Auswertung der Messwerte enthält nun folgende Schritte:

1. Die von den Messfühlern erfassten, in analoger Form vorliegenden Messwerte werden durch einen Analog/Digital-Umformer in Digitalwerte umgeformt.

2. Diese Digitalwerte werden einem Rechner eingegeben, in dem die Werte K2, K3 und D gespeichert sind.

3. Der entsprechend programmierte Rechner berechnet die Werte x, y und z gemäss obiger Formeln.

Der Wert x gibt Aufschluss über die Grösse des Rundlauffehlers der Rolle, der Wert z gibt an, wie weit eine Rolle gegenüber der Normallage versetzt ist, der Wert y gibt Aufschluss über die Phasenlage eines Rundlauffehlers einer Rolle.

**Patentansprüche**

1. Messeinrichtung an einer von drehgelagerten Rollen (11 bis 14, 11' bis 14') gebildeten Rollenbahn (5, 6), insbesondere an einer gegenüberliegenden Strangführungsrollen aufweisenden Stranggiessanlage, mit einem entlang der Rollenbahn (5, 6) bewegbaren und dabei die Rollen in Drehung versetzenden Tragkörper (1), an dem mit den Mantelflächen (15) der Rollen zusammenwirkende Messfühler (7, 8, 9, 7', 8', 9'; 29, 30, 31; 29', 30', 31') angeordnet sind, die den Abstand der Mantelflächen der Rollen zu einer im Tragkörper vorgesehenen neutralen Faser (4) messen, dadurch gekennzeichnet, dass der Tragkörper (1) an der der Rollenbahn (5, 6) zugekehrten Seite mindestens drei in Richtung parallel zur Bewegungsrichtung (16) des Tragkörpers im Abstand voneinander angeordnete Messfühler (7 bis 9, 7' bis 9'; 29 bis 31, 29' bis 31'), die die Mantelfläche (15) einer Rolle in aufeinanderfolgenden Winkelstellungen der Rolle vermessen, aufweist.

2. Messeinrichtung nach Anspruch 1, dadurch gekennzeichnet, dass die Messfühler (7 bis 9, 7' bis 9'; 29 bis 31, 29' bis 31') hintereinander entlang einer Linie parallel zur Bewegungsrichtung (16) des Tragkörpers (1) angeordnet sind.

3. Messeinrichtung nach Anspruch 1 oder 2, dadurch gekennzeichnet, dass der Abstand vom ersten (7, 7'; 29, 29') zum dritten Messfühler (9, 9'; 31, 31') in Bewegungsrichtung (16) des Tragkörpers (1) kleiner ist als der Rollenabstand zweier benachbarter Rollen (11, 12) der Rollenbahn (5, 6) und der Abstand je zweier Messfühler ungleich dem halben Umfang einer Rolle (11) ist.

4. Messeinrichtung nach den Ansprüchen 1 bis 3, dadurch gekennzeichnet, dass die Messfühler (7 bis 9, 7' bis 9'; 29 bis 31, 29' bis 31') in untereinander gleichen Abständen hintereinander angeordnet sind.

5. Messeinrichtung nach den Ansprüchen 1 bis 4, dadurch gekennzeichnet, dass der Abstand vom ersten (7, 7'; 29, 29') zum letzten Messfühler (9, 9'; 31, 31') höchstens 90% des Abstandes zweier benachbarter Rollen (11, 12) sowie höchstens 90% des Umfanges einer Rolle (11) beträgt.

6. Messeinrichtung nach den Ansprüchen 1 bis 5, dadurch gekennzeichnet, dass der Tragkörper als neutrale Faser ein Stahlband (28) aufweist, an dem beiderseits jeweils drei Messfühler (29 bis 31, 29' bis 31') angeordnet sind, wobei die Messfühler jeweils einer Seite mit ihren vom Stahlband (28) weggerichteten Enden mit einem weiteren Stahlband (32, 33) verbunden sind und wobei weiters jeweils zwischen dem äusseren Stahlband (32 bzw. 33) und dem die neutrale Faser verkörpernden Stahlband (28) die Stahlbänder auseinanderdrückende Druckelemente (35) vorgesehen sind (Fig. 3 bis 5).

7. Messeinrichtung nach Anspruch 6, dadurch gekennzeichnet, dass von den Messfühlern (29 bis 31, 29' bis 31') jeder Seite ein Messfühler (30, 30') mit dem die neutrale Faser verkörpernden Stahlband (28) starr und die übrigen Messfühler (29, 31; 29', 31') mit diesem Stahlband (28) gelenkig verbunden sind, wogegen alle Messfühler mit den äusseren Stahlbändern (32, 33) gelenkig verbunden sind (Fig. 3 bis 5).

8. Verfahren zur Auswertung der von den Messfühlern gemäss der Messeinrichtung nach den Ansprüchen 1 bis 7 erfassten Messwerte, dadurch gekennzeichnet, dass die von drei Messfühlern ermittelten Messwerte in einem Analog/Digital-Umwandler in Digitalwerte umgewandelt werden, die Extremwerte gesucht werden und einem Rechner eingegeben werden, der unter Lösung eines Systems von drei Gleichungen mit drei Variablen die Grösse des Rundlauffehlers und die Abweichung der Lage der Drehachse der Rolle von der theoretischen richtigen Lage errechnet.

## Claims

1. Measuring arrangement at a rollerway (5, 6) formed by rotatably mounted rollers (11 to 14, 11' to 14'), in particular in a continuous casting plant including oppositely arranged strand guiding rollers, which measuring arrangement comprises a supporting body (1) movable along the rollerway (5, 6) thus setting the rollers in rotation, on which sensors (7, 8, 9, 7', 8', 9'; 29, 30, 31; 29', 30', 31') are arranged that coact with the surface areas (15) of the rollers and measure the distance between the surface areas of the rollers and a neutral line (4) provided in the supporting body, characterised in that the supporting body (1), on the side facing the rollerway (5, 6), comprises at least three sensors (7 to 9, 7' to 9'; 29 to 31, 29' to 31') arranged at a distance from one another in the direction parallel to the moving direction (16) of the supporting body, which sensors measure the surface area (15) of a roller in subsequent angular position of the roller.

2. Measuring arrangement according to claim 1, characterised in that the sensors (7 to 9, 7' to 9'; 29 to 31, 29' to 31') are arranged one after the other along a line extending parallel to the moving direction (16) of the supporting body (1).

3. Measuring arrangement according to claim 1 or 2, characterised in that the distance between the first (7, 7'; 29, 29') and the third sensor (9, 9'; 31, 31'), in the moving direction (16) of the supporting body (1), is smaller than the roller distance between two neighbouring rollers (11, 12) of the rollerway (5, 6) and that the distance between two sensors each is unequal to half of the circumference of a roller (11).

4. Measuring arrangement according to claims 1 to 3, characterised in that the sensors (7 to 9, 7' to 9'; 29 to 31, 29' to 31') are arranged at equal distances one after the other.

5. Measuring arrangement according to claims 1 to 4, characterised in that the distance between the first (7, 7'; 29, 29') and the last sensor (9, 9'; 31, 31') is 90% of the distance between two neighbouring rollers (11, 12) at the most as well as 90% of the circumference of a roller (11) at the most.

6. Measuring arrangement according to claims 1 to 5, characterised in that the supporting body comprises a steel strip (28) as the neutral line, on either side of which three sensors (29 to 31, 29' to 31') are each arranged, the sensors of one side with their ends facing away from the steel strip (28) being connected with a further steel strip (32, 33), and in that, furthermore, pressure elements (35) are provided between the outer steel strip (32 or 33, respectively) and the steel strip (28) representing the neutral line, which press the steel strips apart (Figs. 3 to 5).

7. Measuring arrangement according to claim 6, characterised in that one sensor (30, 30') of the sensors (29 to 31, 29' to 31') of either side is rigidly connected with the steel strip (28) representing the neutral line and the remaining sensors (29, 31; 29', 31') are articulately connected with this steel strip (28), whereas all of the sensors are articulately connected with the outer steel strips (32, 33) (Figs. 3 to 5).

8. Method of evaluating the measured values obtained by the sensors of the arrangement according to claims 1 to 7, characterised in that the measured values established by the three sensors are converted into digital values in an analog to digital converter, the peaks are found out and input into a computer, which calculates the extent of the true-running error and the deviation of the position of the rotation axis of the roller from the theoretically correct position by solving a system of three equations with three variables.

## Revendications

1. Dispositif de mesure prévu sur un chemin de roulement (5, 6) formé de rouleaux (11 à 14, 11' à 14') montés à rotation, en particulier sur une installation de coulée continue présentant des rouleaux de guidage de la barre, se faisant face, avec un corps porteur (1) mobile le long du chemin de roulement (5, 6) et mettant alors les rouleaux en rotation, sur lequel sont disposés des transducteurs de mesure (7, 8, 9, 7', 8', 9'; 29, 30, 31, 29', 30', 31') coopérant avec les surfaces latérales (15) des rouleaux, ces transducteurs mesurant la distance des surfaces latérales des rouleaux à une fibre neutre (4) prévue dans le corps porteur, caractérisé en ce que le corps porteur (1) présente, du côté orienté vers le chemin de roulement (5, 6) au moins trois transducteurs de mesure (7 à 9, 7' à 9' ; 29 à 31, 29' à 31') disposés à distance les uns des autres en direction parallèle à la direction (16) du mouvement du corps porteur, ces transducteurs appréciant la surface latérale (15) d'un rouleau dans des positions angulaires successives du rouleau.

2. Dispositif de mesure suivant la revendication 1, caractérisé en ce que les transducteurs de mesure (7 à 9, 7' à 9' ; 29 à 31, 29' à 31') sont disposés l'un derrière l'autre le long d'une ligne parallèle à la direction (16) du mouvement du corps porteur (1).

3. Dispositif de mesure suivant la revendication 1 ou 2, caractérisé en ce que la distance du premier (7, 7' ; 29, 29') au troisième transducteur de mesure (9, 9' ; 31, 31') dans la direction (16) du mouvement du corps porteur (1) est plus petite que la distance entre rouleaux de deux rouleaux voisins (11, 12) du chemin de roulement (5, 6) et en ce que la distance entre chaque fois deux transducteurs de mesure n'est pas égale au demi-pourtour d'un rouleau (11).

4. Dispositif de mesure suivant les revendications 1 à 3, caractérisé en ce que les transducteurs (7 à 9; 7' à 9'; 29 à 31, 29' à 31') sont disposés les uns à la suite des autres à des distances égales entre elles.

5. Dispositif de mesure suivant les revendications 1 à 4, caractérisé en ce que la distance du premier (7, 7'; 29, 29') au dernier transducteur de mesure (9, 9'; 31, 31') s'élève au plus à 90% de la distance entre deux rouleaux voisins (11, 12) ainsi qu'au plus à 90% du pourtour d'un rouleau (11).

6. Dispositif de mesure suivant les revendications 1 à 5, caractérisé en ce que le corps porteur comporte comme fibre neutre une bande d'acier (28) par rapport à laquelle sont disposés des deux côtés, chaque fois, trois transducteurs de mesure (29 à 31, 29' à 31'), où les transducteurs de mesure sont reliés chaque fois d'un côté, par leurs extrémités éloignées de la bande d'acier (28), à une autre bande d'acier (32, 33) et où, au surplus, chaque fois entre la bande d'acier extérieure (32 respectivement 33) et la bande d'acier (28) matérialisant la fibre neutre, sont prévus des organes de pression (35) pressant les bandes d'acier à l'écart l'une de l'autre (fig. 3 à 5).

7. Dispositif de mesure suivant la revendication 6, caractérisé en ce que parmi les transducteurs de mesure (29 à 31, 29' à 31') de chaque côté, un transducteur de mesure (30, 30') est relié rigidement à la bande d'acier (28) matérialisant la fibre neutre et en ce que les autres transducteurs de mesure (29, 31, 29', 31') sont reliés à articulation à cette bande d'acier (28), tandis qu'au contraire, tous les transducteurs de mesure sont reliés à articulation aux bandes d'acier extérieures (32, 33) (fig. 3 à 5).

8. Procédé pour l'exploitation des valeurs mesurées, captées suivant le dispositif de mesure suivant les revendications 1 à 7, caractérisé en ce que les valeurs mesurées, relevées par trois transducteurs de mesure, sont transformées dans un convertisseur analogique/numérique en valeurs numériques, en ce que les valeurs extrêmes sont recherchées et transmises à un calculateur qui, en résolvant un système de trois équations à trois variables, calcule la grandeur du faux rond et l'écart de la position des axes de rotation des rouleaux par rapport à la position théoriquement correcte.

## FIG.1

## FIG.2

## FIG.3

## FIG. 4

*32*

59 — 55
53 — 57

46 —
47 —

66 —
64 —

43 —
44 —

45 —

48 —
49 —
50 —

52 —
51 —
54 — 58
60 — 56

*28*

61
35
61
62
65
67

## FIG. 5

61 — 30 — 52

63 — 28

52'
30'

42